# EUROPEAN PATENT APPLICATION

(11) **EP 1 518 456 A1**
(43) Date of publication of application: **30.03.2005**
(21) Application number: 04077536.3
(22) Date of filing: 14.09.2004
(51) Int. Cl.: A01J 25/06, A01J 25/10, A01J 25/12, A01J 25/15

(54) **Method and arrangement for manufacturing cheese**

(30) Priority: 23.09.2003 NL 1024352
(71) Applicant: Juurlink, Gerhardus Hermanus Maria, 7705 PD Drogteropslagen (NL)
(72) Inventor: Juurlink, Gerhardus Hermanus Maria, 7705 PD Drogteropslagen (NL)

(57) **Abstract**

The invention relates to an arrangement manufacturing cheese. The arrangement comprises a first cylindrically shaped vessel (1), provided with a stirring/slicing arrangement (2,3), a sieve (17) for draining off whey, a second, also cylindrically shaped vessel (21), provided with a strip-shaped mixing gear (23) and a third, also cylindrically shaped vessel (25) for receiving the curd/whey mixture in one or more cheese moulds (29).

## Description

The invention relates to a method for manufacturing cheese, in the process of which a mixture of milk and a coagulant is brought into a first vessel, after which the mixture is stirred and/or sliced, such that a mixture of curd and whey is obtained, after which whey is withdrawn from the mixture.

The method according to the invention aims more in particular at the small-scaled traditional cheese making in which, according to the state of the art, the process of stirring and or slicing is periodically stopped in order to withdraw whey. The disadvantage is that, as soon as the stirring and/or slicing is stopped, small knobs of curd will be formed which virtually cannot be removed any more and as a result of which discontinuities are formed which have a negative effect on the end product, the cheese. The method according to the invention substantially obviates this disadvantage and is characterised in that the whey is withdrawn from the mixture during stirring and/or slicing via a sieve which is placed at the centre of the first vessel. In order to prevent the sieve from clogging up, the sieve is cylindrically shaped and is positioned in such a way that the mixing gear moves just along the surface of the sieve, which brings about a self-cleaning effect.

In the manufacturing process according to the state of the art, the curd is subsequently squeezed to a block. This block is cut into pieces and each piece is subsequently placed in a cheese mould for further processing. The disadvantage herewith is that the product must constantly be touched with the hands, which means that there is a real possibility of contamination. A favourable realisation of the inventive method which substantially obviates this disadvantage is characterised in that the mixture is subsequently made to flow via a second vessel into one or more cheese moulds, included in a third vessel, in the process of which a mixing gear located inside the second vessel provides for a homogeneous distribution of the mixture in the cheese moulds.

A further favourable realisation is characterised in that the third vessel is pushed against a set of pressure plates or that the set of pressure plates is pushed against the third vessel, such that in each cheese mould one pressure plate presses the whey at least substantially completely out of the mixture. This process step may also be executed without the product being manually handled. An important additional advantage is that the cheese moulds will be filled with a homogeneous mass, which means that the end product, the cheese, will also show a very homogeneous structure. In the manufacturing process according to the state of the art a piece of a block of squeezed curd pressed into a cheese mould until the piece has assumed the shape of a cheese. This inevitably results in a less homogeneous end product.

A further favourable realisation of the inventive method is characterised in that subsequently the third vessel is turned round above a liquid filled tank, so that the content of each cheese mould lands in the liquid. The advantage is that also this process step takes place without the content of the cheese mould being manually handled.

The invention also relates to an arrangement for manufacturing cheese, comprising a first vessel, provided with a stirring/slicing arrangement and a discharge element for discharging whey, a second vessel for receiving a curd/whey mixture and one or more cheese moulds. According to an aspect of the invention the arrangement is characterised in that the discharge element for whey comprises a cylindrically shaped sieve, placed at the centre of the first vessel, that the second vessel is cylindrically shaped and is provided with a mixing gear and that a third vessel is provided, in which cheese moulds can be placed, which third vessel closes off a bottom side of the second vessel at least during the reception of the curd/whey mixture. An arrangement of this kind is very well suited for manufacturing cheese on a small scale, for obtaining a cheese having a very homogeneous structure which has moreover not been touched by human hands during manufacturing, so that for example contamination with bacteria is substantially excluded. An additional advantage is that the arrangement can be easily cleaned, as all constituent parts are located one above the other and can be rinsed off simultaneously from the top.

A favourable embodiment according to another aspect of the invention, which prevents the sieve of clogging up, is characterised in that a diameter of the cylindrically shaped sieve is chosen such that in a first mode of operation the stirring/slicing arrangement at least nearly touches an outer surface of the sieve.

In a final stage, when sufficient whey has been removed, the cylindrical sieve may be removed if required. A further favourable embodiment of the inventive arrangement is characterised in that the stirring/slicing arrangement is arranged for slicing the curd/whey mixture present at the centre of the first vessel in a second mode of operation.

In the arrangement according to the invention and in known arrangements, the stirring/slicing gear consists of for example two stirrers, located on both sides in the first vessel, which each rotate round their own axis and round a main axis of the first vessel. In order to create space for the cylindrically shaped sieve in the arrangement according to the invention, the arrangement is according to another aspect of the invention characterised in that a drive for the stirring/slicing arrangement comprises a motor and an at least substantially cylindrically shaped driving drum, through which the cylindrically shaped sieve may be passed.

A very favourable embodiment, which is also easy to implement, is according to another aspect of the invention characterised in that the drive is arranged so that a rotational direction of the driving drum determines an operational mode of the stirring/slicing arrangement.

A further favourable embodiment, with which in a single process step a number of cheese moulds can be filled with a homogeneous curd/whey mixture, is characterised in that the third vessel is provided with a number of openings on a first side which operationally contacts the second vessel, into which operationally cheese moulds are placed. The mixing gear, which operationally rotates just above the cheese moulds, provides then for a complete and homogeneous filling of the cheese moulds.

A favourable embodiment is according to a further aspect of the invention is characterised in that the third vessel is provided with pressure means on a second side, positioned opposite the first side. With these pressure means, the third vessel may be pushed against the second vessel during the filling of the cheese moulds.

Another very favourable embodiment is characterised in that characterised in that the third vessel is mounted for rotation, such that the first side may be turned upwards, sidewards and downwards. In a sidewards position the third vessel may the be pressed against a system of pressure plates, in such a way that in each cheese mould one pressure plate squeezes the whey at least substantially completely out of the mixture. When the third vessel is removed from the pressure plates and subsequently rotated with the first side downwards, the freshly shaped cheeses drop out of the cheese moulds into a tank filled with for example brine, after which they may be processed further.

The invention will now be explained more in detail, with a reference to the following figures, in which:
- Fig. 1: represents a possible embodiment of a first vessel according to the invention during filling;
- Fig. 2: represents this embodiment during draining off the whey;
- Fig. 3A: represents a possible embodiment of a second vessel in side view;
- Fig. 3B: represents this embodiment in top view;
- Fig. 4A: schematically represents a possible embodiment of a third vessel in cross section;
- Fig. 4B: represents this embodiment in top view;
- Fig. 5: represents a possible embodiment of a system while filling the cheese moulds;
- Fig. 6: represents the system during compression;
- Fig. 7: represents the system at the moment the cheeses are thrown out;
- Fig. 8A: represents a possible embodiment of a transmission in a first position;
- Fig. 8B: represents this transmission in a second position;
- Fig. 8C: represents this transmission in side view.

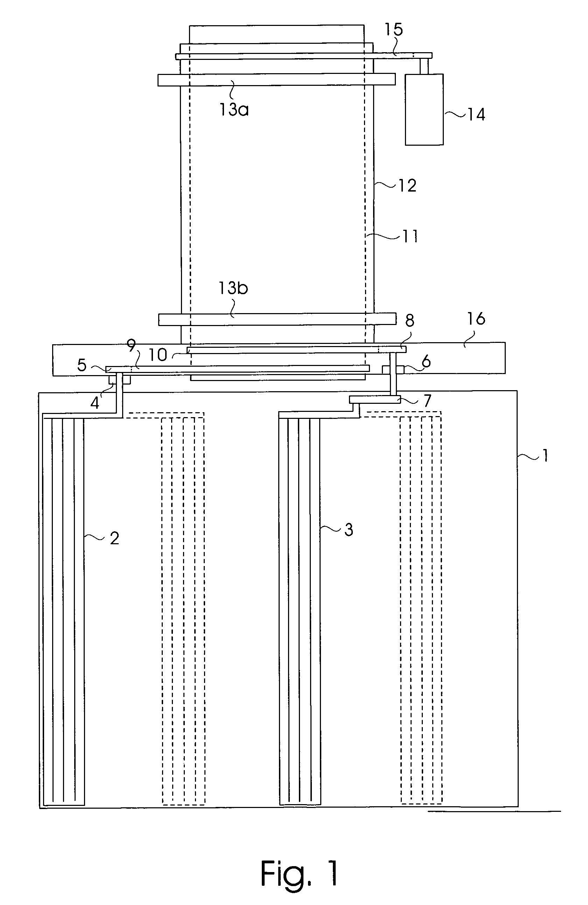

Fig. 1 represents a possible embodiment of a first vessel 1 according to the invention during filling, whereby vessel 1 is filled with for example 1000 litres of milk and with a coagulant, after which a stirring/slicing arrangement consisting of a first knife assembly 2 and a second knife assembly 3 starts stirring the mixture. Once the milk and the coagulant have been mixed sufficiently, the stirring is stopped until the mixture is sufficiently coagulated, after which the mixture is sliced with the aid of knife assembly 2 and knife assembly 3. Knife assembly 2 is provided with a bearing 4 and is connected to a pulley 5 and knife assembly 3 is provided with a bearing 6 and is connected to a pulley 8 via a transmission 7, which will be explained more in detail later. Pulleys 5,8 are each coupled to a cylindrically shaped drum 11, for example with V-belts 9,10, which in turn is connected to vessel 1 with the aid of a frame, not shown in the figure. Round drum 11, a driving drum 12 is placed, provided with two bearings 13a,13b which are also connected to the frame, not shown in the figure, or with two bearings which are located between drum 11 and driving drum 12. Driving drum 12 is driven with the aid of a motor 14 and for example a V-belt 15. Bearings 4,6, pulleys 5,8 and V-belts 9,10 are mounted in a relatively flat drum 16 which is rigidly connected to driving drum 12, which causes knife assembly 2 to perform a complex, cycloid-like movement along the wall of vessel 1, while knife assembly 3 performs a complex, cycloid-like movement round a centre line of vessel 1. In this way, the mixture will be completely stirred, which is important for obtaining a good coagulation.

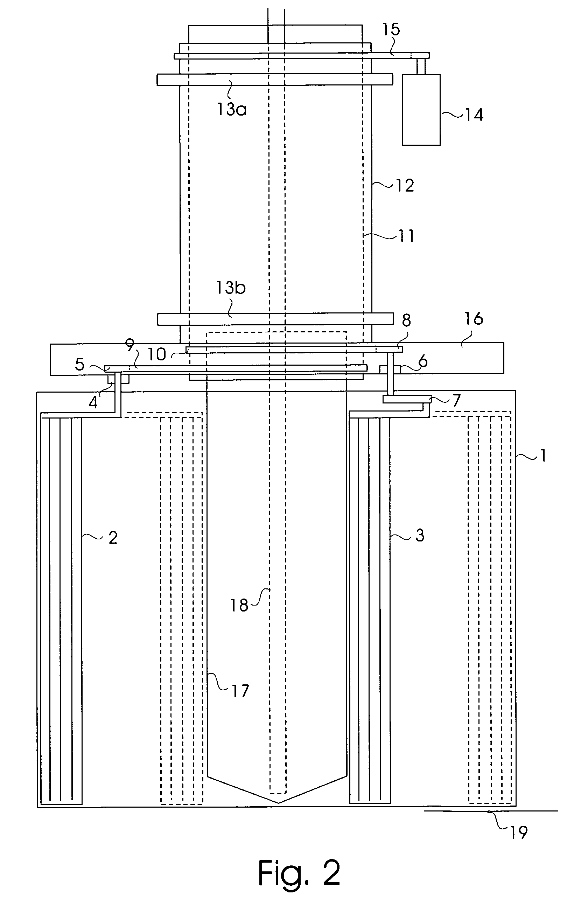

Fig. 2 represents this embodiment during draining off the whey, with a cylindrically shaped sieve 17 which is lowered via the inside of cylindrically shaped drum 11 into vessel 1 with the help of a suction tube 18, via which the whey may be pumped off. Sieve 17 consists for example of a sieve body made of stainless steel, over which a fine-meshed sleeve is pulled. In order to prevent knife assembly 3 from touching sieve 17, transmission 7 is brought into such a position that knife assembly 3 makes a complex, cycloid-like movement along the wall of vessel 1, just like knife assembly 2. During this cycloid-like movement of knife assembly 2 and knife assembly 3, the knives move just along the surface of sieve 17, in which way the clogging up of the fine-meshed sleeve is effectively prevented. In this way, about 800 kilograms of whey may be drained off within a short time. Next, sieve 17 and suction tube 18 are removed and transmission 7 is brought in the position shown in Fig. 1, after which knife assembly 2 and knife assembly 3 may slice the entire volume of the curd, present in vessel 1, for a while. After slicing, usually water is added to the curd and the mixture is stirred again. Then sieve 17 is inserted again and the liquid is drained off. This rinsing process, during which amongst other things lactose is removed, may be repeated a number of times. Once the quality of the curd is sufficiently good, a schematically shown valve 19 is opened and the curd flows, while constantly being stirred, from vessel 1 into a second vessel.

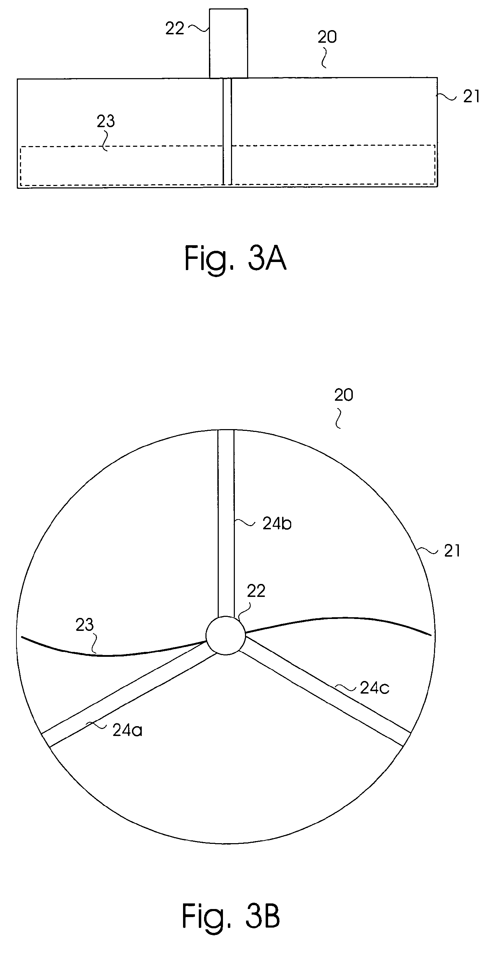

Fig. 3A represents a possible embodiment of a second vessel 20 in side view, consisting of a cylindrical wall 21, onto which a motor 22 is mounted which may make rotate a strip-shaped stirrer 23 of which a lower edge is positioned substantially in the same plane as a lower edge of cylindrical wall 21. In this way, stirrer 23 may distribute the curd, coming from the first vessel, optimally in one or more cheese moulds placed underneath the second vessel 20. Fig. 3B represents this embodiment of a second vessel 20 in top view, with cylindrical wall 21, motor 22 which is mounted to cylindrical wall 21 with the aid of spoke-shaped supports 24a,24b,24c, and stirrer 23.

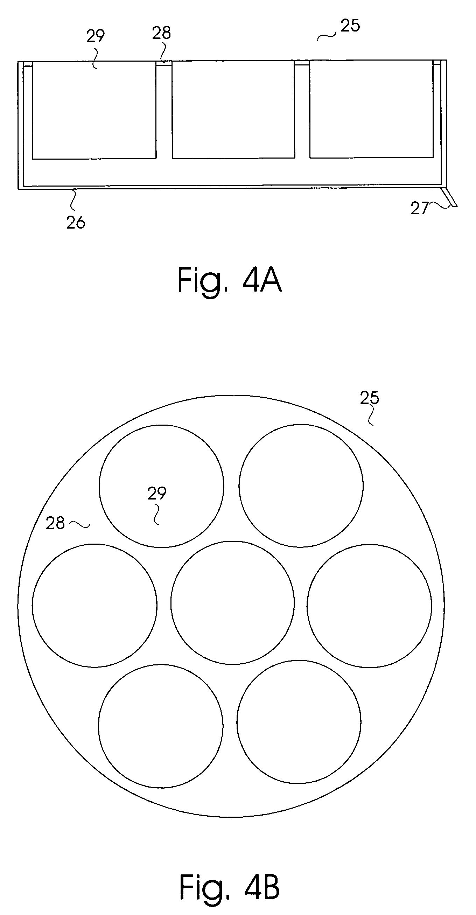

Fig. 4A schematically represents a possible embodiment of a third vessel 25 in cross section, provided with a bottom 26 with an outlet 27 for whey and a lid 28 into which holes are made into which cheese moulds 29 are placed. Operationally, the third vessel is placed underneath the second vessel and the curd, coming from the first vessel, is distributed over the cheese moulds with the aid of stirrer 23. Fig. 4B schematically represents this embodiment in top view, with lid 28 and the cheese moulds 29 placed in it. In the figure, seven holes are made in lid 28 for seven cheese moulds. Obviously, more or less cheese moulds may be accommodated in a third vessel if desired, dependent upon for example the type of cheese that one likes to make. Preferably, the cheese moulds together have such a volume that the entire quantity of curd, produced by the first vessel, can be accommodated.

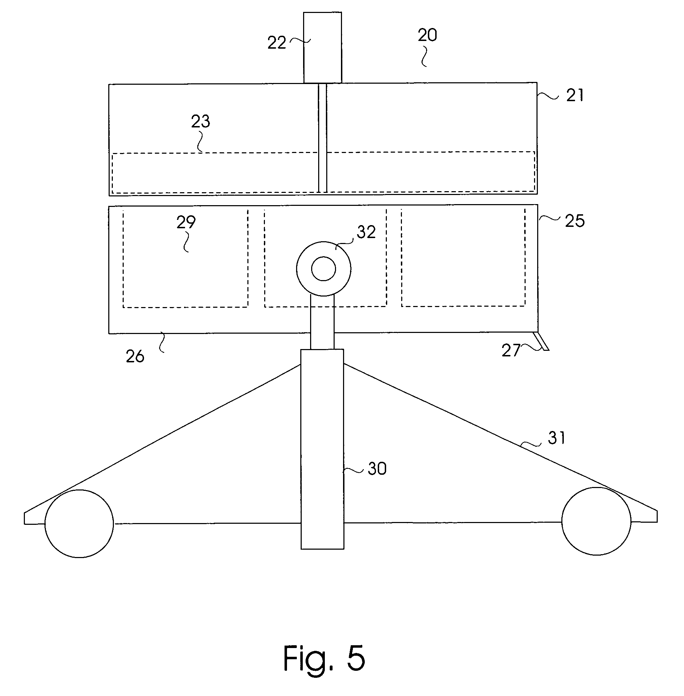

Fig. 5 represents a possible embodiment of a system while filling the cheese moulds, in which third vessel 25 is mounted with a press cylinder 30 to a support 31, in such a way that second vessel 20 can be moved underneath second vessel 20 and can be pressed upwards, against it, after which valve 19 in first vessel 1 may be opened and stirrer 23 may distribute the curd over the cheese moulds 29. The whey which is set free may drain off via an outlet 27 in the bottom in a controlled, previously determined way, so that the amount of whey is further reduced. Third vessel 25 is mounted for rotation round a hinge 32 onto press cylinder 30, but this hinge 32 does not play a role in this process step.

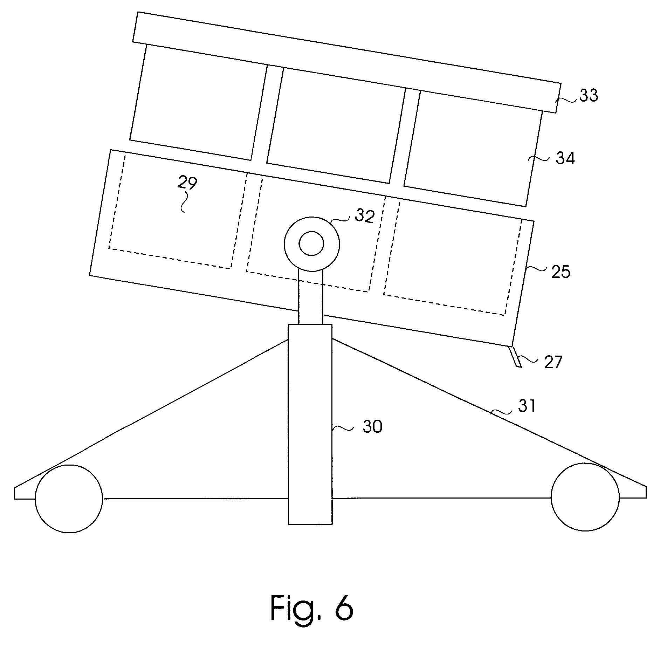

Fig. 6 represents the system during compression of the curd. For this purpose a mounting plate 33 is provided, which is mounted for example to a wall, not shown in the figure, onto which a number of pressure plates 34 is mounted in such a way that they may sink precisely in cheese moulds 29. With the aid of press cylinder 30, third vessel 25 is moved upwards, in the process of which the curd in the cheese moulds 29 is pressed to cheeses while an important part of the remaining whey is drained off via outlet 27. If desired, mounting plate 33 may be mounted in a slanting position to the wall and also third vessel 25 may be put in a slanting position with the aid of hinge 32, in which case the whey may be drained off more easily.

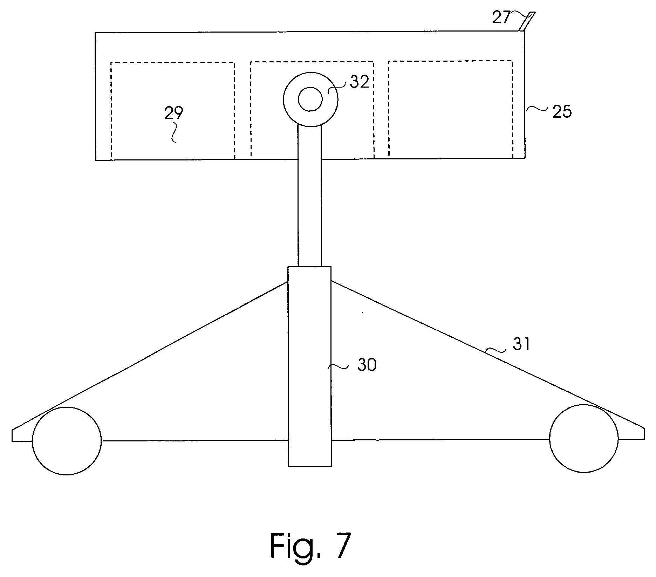

Fig. 7 represents the system at the moment the cheeses are thrown out. For that purpose, third vessel 25 is rotated with the aid of hinge 32, so that the gravitational force makes the cheeses drop out of the cheese moulds into a brine bath, not shown, or into reversal moulds. Unusual is that the cheeses so obtained have not been touched and they are produced substantially without muscle power.

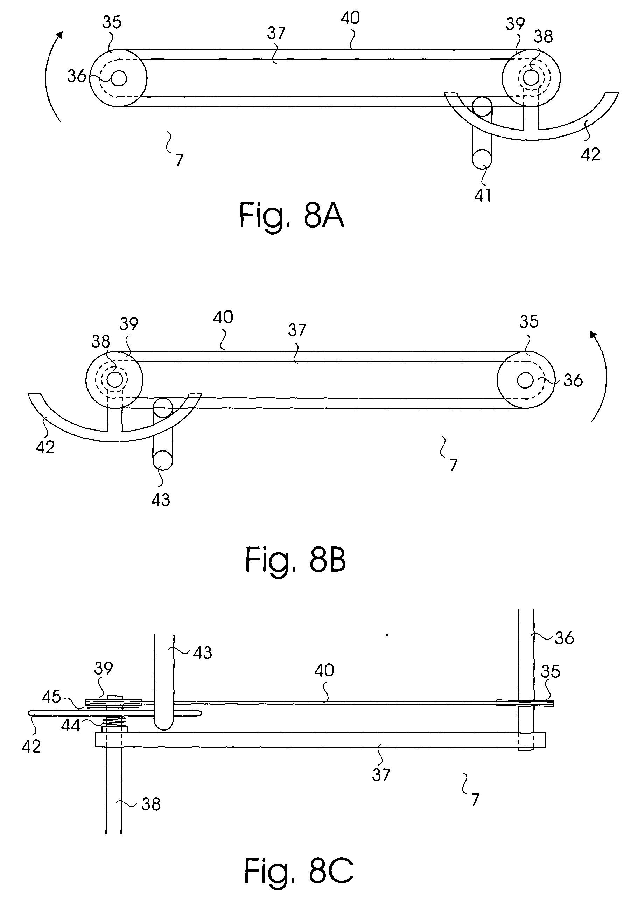

Fig. 8A represents a possible embodiment of a transmission 7 in a first position, consisting of a first gear wheel 35 which is rigidly mounted onto a shaft 36 which is connected to pulley 8 in Fig. 1. An arm 37 is mounted for rotation round round shaft 36, onto an end of which a shaft 38 mounted for rotation, which in turn is connected to knife assembly 3. On shaft 38, a second gear wheel 39 is rigidly mounted. Gear wheel 35 and gear wheel 39 connected with a chain or toothed belt 40. If gear wheel 35 rotates to the right, as shown in the figure, then arm 37 will swing to the right until arm 37 hits a stop 41 which is fixed to flat drum 16. Next, gear wheel 39 will start to rotate and knife assembly 3 will start to move. In order to prevent arm 37 from leaving stop 41, an anchor-shaped device 42 is provided which may rotate round shaft 38 and which is connected to gear wheel 39 via a slip coupling, in such a manner that as long as shaft 36 rotates to the direction shown, anchor-shaped device 42 will be hooked up behind stop 41 and will secure arm 37. In order to enable stop 41 to be fixed to flat drum 16, stop 41 is made J-shaped,where the short leg is the actual stop and the long leg is fixed to flat drum 16.

Fig. 8B represents this transmission 7 in a second position. If gear wheel 35 starts to rotate to the left, as shown in the figure, then arm 37 will swing to the left until arm 37 hits a stop 43 which is fixed to flat drum 16. Next, gear wheel 39 will start to rotate and knife assembly 3 will start to move. In order to prevent arm 37 from leaving stop 43, anchor-shaped device 42 will be hooked up behind stop 43, such that, as long as shaft 36 rotates in the direction shown, anchor-shaped device 42 will secure arm 37.

Fig. 8C represents this transmission, as shown in Fig. 8B in side view, with arm 37, into which shaft 36 is rotatable mounted and gear wheel 35 which is rigidly mounted to shaft 36, with shaft 38 which is rotatable mounted in arm 37 and gear wheel 39 which is rigidly mounted to shaft 38, with anchor-shaped device 42 which is rotatable mounted onto shaft 38 and with a slip coupling consisting of a spring 44 and a disc 45 made of a high friction material which is coupled to gear wheel 39 and stop 43, of which the long leg is visible which is fixed to flat drum 16.

## Claims

1. Method for manufacturing cheese, in the process of which a mixture of milk and a coagulant is brought into a first vessel, after which the mixture is stirred and/or sliced, such that a mixture of curd and whey is obtained, after which whey is withdrawn from the mixture, **characterised in that** the whey is withdrawn from the mixture during stirring and/or slicing via a sieve which is placed at the centre of the first vessel.

2. Method according to claim 1, **characterised in that** the mixture is subsequently made to flow via a second vessel into one or more cheese moulds, included in a third vessel, in the process of which a mixing gear located inside the second vessel provides for a homogeneous distribution of the mixture in the cheese moulds.

3. Method according to claim 2, **characterised in that** the third vessel is pushed against a set of pressure plates or that the set of pressure plates is pushed against the third vessel, such that in each cheese mould one pressure plate presses the whey at least substantially completely out of the mixture.

4. Method according to claim 3, **characterised in that** subsequently the third vessel is turned round above a liquid filled tank, so that the content of each cheese mould lands in the liquid.

5. Arrangement for manufacturing cheese, comprising a first vessel, provided with a stirring/slicing arrangement and a discharge element for discharging whey, a second vessel for receiving a curd/whey mixture and one or more cheese moulds, **characterised in that** the discharge element for whey comprises a cylindrically shaped sieve, placed at the centre of the first vessel, that the second vessel is cylindrically shaped and is provided with a mixing gear and that a third vessel is provided in which cheese moulds can be placed, which third vessel closes off a bottom side of the second vessel at least during the reception of the curd/whey mixture.

6. Arrangement according to claim 5, **characterised in that** a diameter of the cylindrically shaped sieve is chosen such that in a first mode of operation the stirring/slicing arrangement at least nearly touches an outer surface of the sieve.

7. Arrangement according to claim 6, **characterised in that** the stirring/slicing arrangement is arranged for slicing the curd/whey mixture present at the centre of the first vessel in a second mode of operation.

8. Arrangement according to claim 7, **characterised in that** a drive for the stirring/slicing arrangement comprises a motor and an at least substantially cylindrically shaped driving drum, through which the cylindrically shaped sieve may be passed.

9. Arrangement according to claim 8, **characterised in that** the drive is arranged so that a rotational direction of the driving drum determines an operational mode of the stirring/slicing arrangement.

10. Arrangement according to claim 5, **characterised in that** the third vessel is provided with a number of openings on a first side which operationally contacts the second vessel, into which operationally cheese moulds are placed.

11. Arrangement according to claim 10, **characterised in that** the third vessel is provided with pressure means on a second side, positioned opposite the first side.

12. Arrangement according to claim 11, **characterised in that** the third vessel is mounted for rotation, such that the first side may be turned upwards, sidewards and downwards.
